(19) Europäisches Patentamt / European Patent Office / Office européen des brevets

(11) **EP 4 489 128 A1**

(12) **EUROPEAN PATENT APPLICATION**
published in accordance with Art. 153(4) EPC

(43) Date of publication:
**08.01.2025 Bulletin 2025/02**

(21) Application number: **22943059.0**

(22) Date of filing: **24.05.2022**

(51) International Patent Classification (IPC):
*H01M 4/525* (2010.01)    *H01M 4/505* (2010.01)

(52) Cooperative Patent Classification (CPC):
**H01M 4/505; H01M 4/525**

(86) International application number:
**PCT/CN2022/094726**

(87) International publication number:
**WO 2023/225853 (30.11.2023 Gazette 2023/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventor: **ZHOU, Molin**
**Ningde, Fujian 352100 (CN)**

(74) Representative: **Icosa**
**83 avenue Denfert-Rochereau**
**75014 Paris (FR)**

(54) **ELECTROCHEMICAL APPARATUS AND ELECTRONIC DEVICE**

(57)    This application discloses an electrochemical apparatus and an electronic device. The electrochemical apparatus includes a positive electrode plate, where the positive electrode plate includes a positive electrode active material layer, and in a fully charged state of the electrochemical apparatus, a Raman spectrum of the positive electrode active material layer has a characteristic peak A1 within a range of 580 cm$^{-1}$ to 640 cm$^{-1}$ and a characteristic peak B1 within a range of 420 cm$^{-1}$ to 520 cm$^{-1}$. The electrochemical apparatus of this application has high energy density and good cycling performance.

FIG. 1

## Description

## TECHNICAL FIELD

This application relates to the technical field of battery, and in particular, to an electrochemical apparatus and an electronic device.

## BACKGROUND

Lithium-ion batteries have been widely used due to their advantages of high energy density, high power density, high operating voltage, good cycling performance, low self-discharge, and high safety. However, during the first charge and discharge cycle of a lithium-ion battery, a large amount of active lithium is consumed by a solid electrolyte interface film (SEI film) formed on a surface of a negative electrode, causing irreversible capacity loss, thereby leading to reduced energy density of the lithium-ion battery. In addition, in a subsequent cycling process, the destruction and regeneration of the SEI film further consume active lithium, leading to a shorter cycle life of the battery.

## SUMMARY

In view of this, this application provides an electrochemical apparatus and an electronic device, so as to increase the energy density of the electrochemical apparatus and prolong the high-temperature cycle life of the electrochemical apparatus.

According to a first aspect of this application, an electrochemical apparatus is provided and includes a positive electrode plate, where the positive electrode plate includes a positive electrode active material layer, and in a fully charged state of the electrochemical apparatus, a Raman spectrum of the positive electrode active material layer has a characteristic peak A1 within a range of 580 $cm^{-1}$ to 640 $cm^{-1}$ and a characteristic peak B1 within a range of 420 $cm^{-1}$ to 520 $cm^{-1}$. The characteristic peak B1 is a characteristic vibration peak of a Li-O-Li bond in a lithium manganese composite oxide with a layered crystal structure, and the characteristic peak A1 is a characteristic vibration peak of a metal-O bond in a lithium cobalt composite oxide and lithium manganese composite oxide with a layered crystal structure. On one hand, the lithium manganese composite oxide with the layered crystal structure has characteristics of high initial charge specific capacity and low initial coulombic efficiency, so that when the lithium manganese composite oxide with the layered crystal structure is used in combination with the lithium cobalt composite oxide with high initial coulombic efficiency, the cycling performance of the electrochemical apparatus can be significantly improved. On the other hand, during the initial discharge of the electrochemical apparatus, part of active lithium is intercalated back to a high voltage range of the lithium manganese composite oxide with the layered crystal structure, and in a subsequent cycling process, as the active lithium continues to be consumed, a positive electrode potential synchronously rises. At this time, the active lithium intercalated back to the high voltage range of the lithium manganese composite oxide with the layered crystal structure is released slowly. The presence of the characteristic peak A1 in the Raman spectrum of the positive electrode active material layer indicates that the lithium manganese composite oxide with the layered crystal structure has high structural stability in the fully charged state and can provide sufficient lithium sources for the destruction and regeneration of an SEI film in the subsequent cycling process, suppressing the structural damage to the lithium cobalt composite oxide due to excessive lithium deintercalation in a high-temperature cycling process, thereby prolonging the high-temperature cycle life of the electrochemical apparatus.

In some embodiments, a peak intensity of the characteristic peak A1 is $I_{A1}$, and a peak intensity of the characteristic peak B1 is $I_{B1}$, satisfying: $1.4 \leq I_{A1}/I_{B1} \leq 36$. In some embodiments, $1.4 < I_{A1}/I_{B1} \leq 21$.

In some embodiments, the positive electrode active material layer includes a first material and a second material, where the first material is a lithium cobalt composite oxide with a layered crystal structure, and the second material is a lithium manganese composite oxide with a layered crystal structure.

In some embodiments, the second material includes R-3m and C2/m crystal phase structures.

In some embodiments, the second material includes element Mn, element T, element O, selectable element Ni, and selectable element T', where the element T includes at least one of Fe or Co, and the element T' includes at least one of Mg, Al, Ti, V, Cr, Cu, Y, Zr, Nb, Mo, La, Zn, Ga, Ru, Ag, Sn, Au, Ce, Pr, Nd, Sm, Gd, or W; and in the second material, a molar content of the element Mn is $n_{Mn}$, a molar content of the element T is $n_T$, a molar content of the element O is $n_O$, a molar content of the element Ni is $n_{Ni}$, a molar content of the element T' is $n_{T'}$, and a sum of the molar content of the element Mn, element Fe, element Ni, and element T is $n_M$, satisfying: $0.25 \leq n_{Mn}/n_M \leq 0.85$, $0.05 \leq n_T/n_M \leq 0.65$, $0 \leq n_{Ni}/n_M \leq 0.4$, $0 \leq n_{T'}/n_M \leq 0.05$, and $0.35 \leq n_M/n_O \leq 0.475$. An appropriate amount of element T (Fe and/or Co) added into the components of the second material makes a structure of the second material after lithium deintercalation more stable. Since most of the element Mn in products of the second material after lithium deintercalation is in the form of $Mn^{4+}$, the Jahn-Teller distortion effect of $Mn^{3+}$ can be effectively suppressed, the damage to the SEI film caused by dissolution of the element Mn is reduced, and the high-temperature cycle life of the electrochemical apparatus can be effectively prolonged.

In some embodiments, the first material includes element Co and selectable element Me, where the element Me includes at least one of Ni, Mn, Al, Mg, Ti, Zr, La, Y, Mo, V, Cu, Zn, Ga, Nb, Cr, Ba, W, Ru, Ag, Sn, Au, Ce, Pr, Nd, Sm, Gd, or Ca; and in the second material, a molar content of the element Co is $m_{Co}$, a molar content of the element Me is $m_{Me}$, and a sum of the molar content of the element Co and element Me is $m_M$, satisfying: $0.5 \leq m_{Co}/m_M \leq 1$, and $0 \leq m_{Me}/m_M \leq 0.5$.

In some embodiments, $0.05 \leq n_T/n_M \leq 0.5$.

In some embodiments, the element T includes Fe, and in the second material, a molar content of element Fe is $n_{Fe}$, satisfying: $0.05 \leq n_{Fe}/n_M \leq 0.5$. The content of Fe in the second material falls within the above range. Since ionization energy of $Fe^{3+}$ to $Fe^{4+}$ is much higher than that of $Co^{3+}$ to $Co^{4+}$, during cycling at a high voltage, an average valence state of Fe is lower than that of Co. On one hand, this can reduce oxidation of high-valence metal ions on an electrolyte at an interface. On the other hand, this helps Mn maintain a high valence state, suppressing the Jahn-Teller distortion effect of Mn and reducing the risk of Mn dissolution. In addition, this can enhance the structural stability of the material, suppressing the migration of transition metals to a lithium layer, thereby prolonging the high-temperature cycle life of the electrochemical apparatus.

In some embodiments, an average particle size of the first material is $D_1$, and an average particle size of the second material is $D_2$, satisfying: $0.3 \leq D_2/D_1 \leq 0.5$.

In some embodiments, the average particle size $D_1$ of the first material is 10 $\mu$m to 25 $\mu$m. In some embodiments, the average particle size $D_2$ of the second material is 4 $\mu$m to 9 $\mu$m.

In some embodiments, a compacted density of the positive electrode active material layer is P, satisfying: 3.5 $g/cm^3 \leq P \leq 4.5$ $g/cm^3$.

In some embodiments, the second material includes any one of materials represented by chemical formula I:

$$Li_{2-e}Ni_aT_bMn_cT'_dO_2 \qquad \text{chemical formula I,}$$

where $0 \leq a \leq 0.35$, $0 < b \leq 0.6$, $0.25 \leq c \leq 0.65$, $0 \leq d \leq 0.05$, $0.7 \leq a+b+c+d \leq 0.95$, $0.7 \leq e \leq 0.95$, T includes at least one of Fe or Co, and T' includes at least one of Mg, Al, Ti, V, Cr, Cu, Y, Zr, Nb, Mo, La, Zn, Ga, Ru, Ag, Sn, Au, Ce, Pr, Nd, Sm, Gd, or W.

In some embodiments, the first material includes any one of materials represented by chemical formula II:

$$Li_xCo_yMe_{1-y}O_{2-t}A_t \qquad \text{chemical formula II,}$$

where $0.6 \leq x \leq 1.2$, $0.5 \leq y \leq 1$, $0 \leq t \leq 0.2$, Me includes at least one of Ni, Mn, Al, Mg, Ti, Zr, La, Y, Mo, V, Cu, Zn, Ga, Nb, Cr, Ba, W, Ru, Ag, Sn, Au, Ce, Pr, Nd, Sm, Gd, or Ca, and A includes at least one of S, N, F, Cl, or Br.

According to a second aspect of this application, an electronic device is provided and includes any one of the foregoing electrochemical apparatuses.

The technical solutions of this application include at least the following beneficial effects: (1) In this application, the composition of the positive electrode plate and cut-off voltage during formation are ingeniously designed, so that the positive electrode plate has unique Raman spectrum characteristics, thereby making the positive electrode plate have high structural stability during cycling. Especially, an appropriate amount of element T (Fe and/or Co) is added into the components of the second material, making the structure of the second material after lithium deintercalation more stable. Since most of the element Mn in the products of the second material after lithium deintercalation is in the form of $Mn^{4+}$, the Jahn-Teller distortion effect of $Mn^{3+}$ can be effectively suppressed, the damage to the SEI film caused by dissolution of the element Mn is reduced, and the high-temperature cycle life of a lithium-ion battery can be effectively prolonged. (2) $Li_2NiO_2$-type materials disclosed in the prior art have high specific capacity but are expensive and extremely sensitive to air, so such materials are needed to be processed in a dry room. In addition, such materials have extremely high amounts of free lithium on their surfaces, easily causing slurry gelation in a slurry preparation process, and leading to poor processing performance. With low costs and high air stability, the second material in this application has a higher compatibility with the production process of the existing lithium-ion batteries.

**BRIEF DESCRIPTION OF DRAWINGS**

To describe the technical solutions in some embodiments of this application more clearly, the following briefly describes the accompanying drawings required for describing these embodiments. Apparently, the accompanying drawings in the following description show merely some embodiments of this application, and persons skilled in the art may still derive other drawings from these accompanying drawings.

FIG. 1 is a Raman spectrum of a positive electrode active material layer in Example 1 of this application; and

FIG. 2 is an SEM test image of a second material $Li_{1.2}Ni_{0.133}Fe_{0.133}Mn_{0.534}O_2$ in the positive electrode plate in Example 1 of this application.

**DESCRIPTION OF EMBODIMENTS**

To make the objectives, technical solutions, and advantages of this application clearer and more comprehensible, the following further describes this application in detail with reference to the accompanying drawings and some embodiments. It should be understood that the specific embodiments described herein are merely intended to explain this application rather than to limit this application.

For brevity, this specification explicitly discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not expressly recorded, each point or individual single numerical value between end points of a range is included in the range. Therefore, each point or individual single numerical value may itself be a lower limit or an upper limit which can be combined with any other point or individual numerical value or combined with another lower limit or upper limit to form a range not expressly recorded.

In the specific embodiments and claims, an item list connected by the terms "at least one of", "at least one piece of", "at least one kind of" or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C.

Electrochemical apparatus

A first aspect of an embodiment of this application provides an electrochemical apparatus including a positive electrode plate, a negative electrode plate, a separator, and an electrolyte.

Positive electrode plate

The positive electrode plate includes a positive electrode current collector and a positive electrode active material layer disposed on a surface of the positive electrode current collector. As an example, the positive electrode current collector includes two opposite surfaces in its thickness direction, and the positive electrode active material layer is applied on either or both of the two opposite surfaces of the positive electrode current collector.

In a fully charged state of the electrochemical apparatus, a Raman spectrum of the positive electrode active material layer has a characteristic peak A1 within a range of 580 $cm^{-1}$ to 640 $cm^{-1}$ and a characteristic peak B1 within a range of 420 $cm^{-1}$ to 520 $cm^{-1}$. The Raman spectrum of the positive electrode active material layer is obtained by testing the positive electrode plate after disassembled from the electrochemical apparatus in the fully charged state designed.

In the Raman spectrum of the positive electrode active material layer according to this embodiment of this application, the characteristic peak A1 is present within the range of 580 $cm^{-1}$ to 640 $cm^{-1}$, where the peak A1 is a characteristic vibration peak of an M-O bond and is mainly contributed by a lithium cobalt composite oxide and lithium manganese composite oxide with a layered crystal structure, M being a metal element. The characteristic peak B1 is present within the range of 420 $cm^{-1}$ to 520 $cm^{-1}$, where the peak B1 is a characteristic vibration peak of a Li-O-Li bond in a lithium manganese composite oxide with a layered crystal structure. On one hand, the lithium manganese composite oxide with the layered crystal structure has characteristics of high initial charge specific capacity and low initial coulombic efficiency, so that when the lithium manganese composite oxide with the layered crystal structure is used in combination with the lithium cobalt composite oxide with high initial coulombic efficiency, the cycling performance of the electrochemical apparatus can be significantly improved. On the other hand, during the initial discharge of the electrochemical apparatus, part of active lithium is intercalated back to a high voltage range of the lithium manganese composite oxide with the layered crystal structure, and in a subsequent cycling process, as the active lithium continues to be consumed, a positive electrode potential synchronously rises. At this time, the active lithium intercalated back to the high voltage range of the lithium manganese composite oxide with the layered crystal structure is released slowly. The presence of the characteristic peak A1 in the Raman spectrum of the positive electrode active material layer indicates that the lithium manganese composite oxide with the layered crystal structure has high structural stability in the fully charged state and can provide sufficient lithium sources for the destruction and regeneration of an SEI film in the subsequent cycling process, suppressing the structural damage to the lithium cobalt composite oxide due to excessive lithium deintercalation in a high-temperature cycling process, thereby prolonging the high-temperature cycle life of the electrochemical apparatus.

In some embodiments, a peak intensity of the characteristic peak A1 is $I_{A1}$, and a peak intensity of the characteristic peak B1 is $I_{B1}$, satisfying: $1.4 \leq I_{A1}/I_{B1} \leq 36$.

For example, the peak intensity ratio $I_{A1}/I_{B1}$ of the diffraction peak A1 to the diffraction peak B1 is 1.4, 2.0, 5.0, 10, 15, 20, 25, 30, or 36, or falls within a range defined by any two of the foregoing values. In some embodiments, $1.4 \leq I_{A1}/I_{B1} \leq 21$.

In some embodiments, the positive electrode active material layer includes a first material and a second material, where the first material is a lithium cobalt composite oxide with a layered crystal structure, and the second material is a lithium manganese composite oxide with a layered crystal structure.

In some embodiments, the second material includes R-3m and C2/m crystal phase structures.

In some embodiments, the second material includes element Mn, element T, element O, selectable element Ni, and selectable element T', where the element T includes at least one of Fe or Co, and the element T' includes at least one of Mg, Al, Ti, V, Cr, Cu, Y, Zr, Nb, Mo, La, Zn, Ga, Ru, Ag, Sn, Au, Ce, Pr, Nd, Sm, Gd, or W; and in the second material, a molar content of the element Mn is $n_{Mn}$, a molar content of the element T is $n_T$, a molar content of the element O is $n_O$, a molar content of the element Ni is $n_{Ni}$, a molar content of the element T' is $n_{T'}$, and a sum of the molar content of the element Mn, element T, element Ni, and element T' is $n_M$, satisfying: $0.25 \leq n_{Mn}/n_M \leq 0.85$, $0.05 \leq n_T/n_M \leq 0.65$, $0 \leq n_{Ni}/n_M \leq 0.4$, $0 \leq n_{T'}/n_M \leq 0.05$, and $0.35 \leq n_M/n_O \leq 0.475$. An appropriate content of element T (Fe and/or Co) added into the components of the second material makes a structure of the second material after lithium deintercalation more stable. Since most of the element Mn in products of the second material after lithium deintercalation is in the form of $Mn^{4+}$, the Jahn-Teller distortion effect of $Mn^{3+}$ can be effectively suppressed, the damage to the SEI film caused by dissolution of the element Mn is reduced, and the high-temperature cycle life of the electrochemical apparatus can be effectively prolonged.

Optionally, in an example, the second material includes element Mn, element T, and element O; or in another example, the second material includes element Mn, element T, element O, and at least one of element Ni or element T'.

For example, the molar ratio $n_{Mn}/n_M$ of $n_{Mn}$ to $n_M$ is 0.25, 0.30, 0.35, 0.4, 0.45, 0.5, 0.6, 0.7, 0.8, or 0.85, or falls within a range defined by any two of the foregoing values.

For example, the molar ratio $n_T/n_M$ of $n_T$ to $n_M$ is 0.05, 0.06, 0.08, 0.1, 0.2, 0.3, 0.4, 0.5, or 0.65, or falls within a range defined by any two of the foregoing values. In some embodiments, a value range of the molar ratio $n_T/n_M$ of $n_T$ to $n_M$ is $0.05 \leq n_T/n_M \leq 0.5$.

For example, the molar ratio $n_{Ni}/n_M$ of $n_{Ni}$ to $n_M$ 0, 0.001, 0.01, 0.05, 0.08, 0.1, 0.2, 0.3, or 0.4, or falls within a range defined by any two of the foregoing values.

For example, the molar ratio $n_{T'}/n_M$ of $n_{T'}$, to $n_M$ is 0, 0.001, 0.01, 0.02, 0.03, 0.04, or 0.05, or falls within a range defined by any two of the foregoing values.

For example, the molar ratio $n_M/n_O$ of $n_M$ to $n_O$ is 0.35, 0.40, 0.41, 0.42, 0.43, 0.44, 0.45, or 0.475, or falls within a range defined by any two of the foregoing values.

In some embodiments, the element T includes Fe, and in the second material, a molar content of element Fe is $n_{Fe}$, satisfying: $0.05 \leq n_{Fe}/n_M \leq 0.5$. The content of Fe in the second material falls within the above range. Since ionization energy of $Fe^{3+}$ to $Fe^{4+}$ is much higher than that of $Co^{3+}$ to $Co^{4+}$, during cycling at a high voltage, an average valence state of Fe is lower than that of Co. On one hand, this can reduce oxidation of high-valence metal ions on an electrolyte at an interface. On the other hand, this helps Mn maintain a high valence state, suppressing the Jahn-Teller distortion effect of Mn and reducing the risk of Mn dissolution. In addition, this can enhance the structural stability of the material, suppressing the migration of transition metals to a lithium layer, thereby prolonging the high-temperature cycle life of the electrochemical apparatus.

In some embodiments, the first material includes element Co and selectable element Me, where the element Me includes at least one of Ni, Mn, Al, Mg, Ti, Zr, La, Y, Mo, V, Cu, Zn, Ga, Nb, Cr, Ba, W, Ru, Ag, Sn, Au, Ce, Pr, Nd, Sm, Gd, or Ca; and in the second material, a molar content of the element Co is $m_{Co}$, a molar content of the element Me is $m_{Me}$, and a sum of the molar content of the element Co and element Me is $m_M$, satisfying: $0.5 \leq m_{Co}/m_M \leq 1$, and $0 \leq m_{Me}/m_M \leq 0.5$.

For example, $m_{Co}/m_M$ is 0.5, 0.6, 0.7, 0.8, 0.9, or 1.0, or falls within a range defined by any two of the foregoing values.

For example, $m_{Me}/m_M$ is 0, 0.01, 0.05, 0.1, 0.15, 0.2, 0.3, 0.4, or 0.5, or falls within a range defined by any two of the foregoing values.

In some embodiments, an average particle size of the first material is $D_1$, and an average particle size of the second material is $D_2$, satisfying: $0.3 \leq D_2/D_1 \leq 0.5$. In this case, particles of the second material can be embedded among particles of the first material, efficiently supplementing active lithium for the first material and reducing the occurrence of side reactions on their surfaces, thereby prolonging the cycle life of the electrochemical apparatus.

Specifically, a test method of the average particle size is performed using a scanning electron microscope. The specific test method includes: taking a sample of the positive electrode active material layer and observing the sample under the scanning electron microscope (SEM); photographing SEM images at an appropriate magnification; by using image processing software, performing statistics collection of the longest diameters of random 50 particles of the first material, and taking an average value as the average particle size $D_1$ of the first material; and performing statistics collection of the longest diameters of random 50 particles of the second material, and taking an average value as the average particle size $D_2$ of the second material.

For example, a particle size ratio $D_2/D_1$ of $D_2$ to $D_1$ is 0.3, 0.35, 0.4, 0.45, or 0.5, or falls within a range defined by any two of the foregoing values.

In some embodiments, the average particle size $D_1$ of the first material is 10 $\mu$m to 25 $\mu$m. For example, the

average particle size $D_1$ of the first material is 10 $\mu$m, 12 $\mu$m, 14 $\mu$m, 16 $\mu$m, 18 $\mu$m, 20 $\mu$m, 22 $\mu$m, or 25 $\mu$m, or falls within a range defined by any two of the foregoing values.

In some embodiments, the average particle size $D_2$ of the second material is 4 $\mu$m to 9 $\mu$m. For example, the average particle size $D_2$ of the second material is 4 $\mu$m, 5 $\mu$m, 6 $\mu$m, 8 $\mu$m, or 9 $\mu$m, or falls within a range defined by any two of the foregoing values.

In some exemplary embodiments, a compacted density of the positive electrode active material layer is P, satisfying: $3.5 \text{g/cm}^3 \leq P \leq 4.5 \text{ g/cm}^3$. For example, the compacted density P of the positive electrode active material layer is 3.5 $\text{g/cm}^3$, 4.0 $\text{g/cm}^3$, 4.1 $\text{g/cm}^3$, 4.2 $\text{g/cm}^3$, 4.3 $\text{g/cm}^3$, or 4.5 $\text{g/cm}^3$, or falls within a range defined by any two of the foregoing values.

The compacted density P can be calculated using the formula P=m/v, where m is the weight of the positive electrode active material layer, measured in g; and v is the volume of the positive electrode active material layer, measured in $\text{cm}^3$. The volume v of the positive electrode active material layer is a product of the area S and thickness h of the positive electrode active material layer.

In some embodiments, the second material includes any one of materials represented by chemical formula I:

$$Li_{2-e}Ni_aT_bMn_cT'_dO_2 \qquad \text{chemical formula I,}$$

where $0 \leq a \leq 0.35$, $0 < b \leq 0.6$, $0.25 \leq c \leq 0.65$, $0 \leq d \leq 0.05$, $0.7 \leq a+b+c+d \leq 0.95$, $0.7 \leq e \leq 0.95$, T includes at least one of Fe or Co, and T' includes at least one of Mg, Al, Ti, V, Cr, Cu, Y, Zr, Nb, Mo, La, Zn, Ga, Ru, Ag, Sn, Au, Ce, Pr, Nd, Sm, Gd, or W.

In some embodiments, the first material includes any one of materials represented by chemical formula II:

$$Li_xCo_yMe_{1-y}O_{2-t}A_t \qquad \text{chemical formula II,}$$

where $0.6 \leq x \leq 1.2$, $0.5 \leq y \leq 1$, $0 \leq t \leq 0.2$, Me includes at least one of Ni, Mn, Al, Mg, Ti, Zr, La, Y, Mo, V, Cu, Zn, Ga, Nb, Cr, Ba, W, Ru, Ag, Sn, Au, Ce, Pr, Nd, Sm, Gd, or Ca, and A includes at least one of S, N, F, Cl, or Br.

In some embodiments, a weight ratio of the first material to the second material is 6.8:1 to 97:1. A content of the first material is controlled to be higher than that of the second material in the positive electrode plate, such that a large portion of the positive electrode plate is made of the first material and the positive electrode plate has higher structural stability, reducing capacity loss and impedance increase during cycling.

In some embodiments, based on a total weight of the positive electrode active material layer, a weight percentage of the first material is 85wt% to 97wt%. For example, the weight percentage of the first material is 85wt%, 90wt%, 92wt%, 94wt%, 96wt%, or 97wt%, or falls within a range defined by any two of the foregoing values.

In some embodiments, based on the total weight of the positive electrode active material layer, a weight percentage of the second material is 1wt% to 12.5wt%. For example, the weight percentage of the second material is 1wt%, 2wt%, 3wt%, 5wt%, 8wt%, 10wt%, 11wt%, 12wt%, or 12.5wt%, or falls within a range defined by any two of the foregoing values.

In some embodiments, the positive electrode active material layer further includes a conductive agent and a binder.

In some embodiments, based on the total weight of the positive electrode active material layer, a weight percentage of the conductive agent is 0.1wt% to 5wt%. In some embodiments, based on the total weight of the positive electrode active material layer, a weight percentage of the binder is 0.5wt% to 5wt%. For example, the conductive agent includes one or more of graphite, conductive carbon, acetylene black, carbon black, Ketjen black, carbon dots, carbon nanotubes, graphene, or carbon nanofiber. For example, the binder includes one or more of styrene-butadiene rubber (SBR), water based acrylic resin (water based acrylic resin), carboxymethyl cellulose (CMC), polyvinylidene fluoride (PVDF), polytetrafluoroethylene (PTFE), polyvinyl butyral (PVB), ethylene-vinyl acetate copolymer (EVA), or polyvinyl alcohol (PVA).

For example, the positive electrode current collector includes at least one of a metal foil or a porous metal plate, for example, a foil or porous plate made of metal such as aluminum, copper, nickel, titanium, or silver, or alloys thereof, such as an aluminum foil. Optionally, the thickness of the positive electrode current collector is 4 $\mu$m to 20 $\mu$m.

The positive electrode plate of this application may be prepared using a conventional method in the art. For example, a positive electrode slurry containing the first material, the second material, the conductive agent, and the binder is applied on at least one surface of the positive electrode current collector to obtain a positive electrode active material coating, followed by processes such as drying and cold pressing to obtain the positive electrode plate.

Others

The negative electrode plate may be a lithium metal plate or may include a negative electrode current collector and a negative electrode active material layer disposed on at least one surface of the negative electrode current collector.

The negative electrode active material layer typically includes a negative electrode active material and a selectable conductive agent and binder.

For example, the negative electrode active material includes one or more of natural graphite, artificial graphite, mesocarbon microbeads (MCMB), hard carbon, soft carbon, silicon, silicon-carbon composite, SiO, Li-Sn alloy, Li-Sn-O alloy, Li-Al alloy, or lithium metal. The conductive agent includes one or more of conductive carbon, acetylene black, carbon black, Ketjen black, carbon dots, carbon nanotubes, graphene, or carbon nanofiber. The binder includes one or more of styrene-butadiene rubber (SBR), polyvinylidene fluoride (PVDF), polytetrafluoroethylene (PTFE), polyvinyl butyral (PVB), water-based acrylic resin (water-based acrylic resin), or carboxymethyl cellulose (CMC). However, this application is not limited to these materials, and may alternatively use other materials that can be used as negative electrode active materials, conductive agents, and binders for lithium-ion batteries.

For example, the negative electrode current collector may be made of a material such as a metal foil or a porous metal plate, for example, a foil or porous plate made of metal such as copper, nickel, titanium, or iron, or alloys thereof, such as a copper foil.

The negative electrode plate may be prepared using a conventional method in the art. For example, the negative electrode active material and the selectable conductive agent and binder are dispersed in a solvent, where the solvent may be N-methylpyrrolidone (NMP) or deionized water, to form a uniform negative electrode slurry; and the negative electrode slurry is applied on the negative electrode current collector, followed by processes such as drying and cold pressing to obtain the negative electrode plate.

There is no particular limitation on the separator, and any common porous separator with electrochemical and chemical stability can be selected, for example, a mono-layer or multi-layer film made of one or more of glass fiber, non-woven fabric, polyethylene (PE), polypropylene (PP), or polyvinylidene fluoride (PVDF).

The electrolyte includes an organic solvent, an electrolytic lithium salt, and an additive. The electrolyte is not limited to any specific type in this application, and may be selected based on actual requirements.

For example, the organic solvent includes one or more, preferably more than two, of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma butyrolactone (GBL), sulfolane (SF), methyl sulfonyl methane (MSM), ethyl methyl sulfone (EMS), or diethyl sulfone (ESE).

For example, the electrolytic lithium salt includes one or more of $LiPF_6$ (lithium hexafluorophosphate), $LiBF_4$ (lithium tetrafluoroborate), $LiClO_4$ (lithium perchlorate), $LiAsF_6$ (lithium hexafluoroborate), LiFSI (lithium bis(fluorosulfonyl)imide), LiTFSI (lithium bistrifluoromethanesulfonimide), LiTFS (lithium trifluoromethanesulfonat), LiDFOB (lithium difluoro(oxalato)borate), LiBOB (lithium bisoxalatoborate), $LiPO_2F_2$ (lithium difluorophosphate), LiDFOP (lithium difluoro-o(dioxalato)phosphate), or LiTFOP (lithium tetrafluoro oxalate phosphate).

The electrolyte further optionally includes another additive. The another additive may be any additive that can be used as an additive of a lithium-ion secondary battery, which is not specifically limited in this application, and may be selected based on actual requirements. As an example, the additive may be one or more of vinylene carbonate (VC), vinyl ethylene carbonate (VEC), succinonitrile (SN), adiponitrile (AND), 1,3-propane sultone (PST), tris(trimethylsilyl)phosphate (TMSP), or tris(trimethylsilyl)borate (TMSB).

The electrochemical apparatus may be prepared using a conventional method in the art. For example, the positive electrode plate, the separator, and the negative electrode plate are stacked in sequence such that the separator is sandwiched between the positive electrode plate and the negative electrode plate for separation, to obtain an electrode assembly, or the resulting stack is wound to obtain an electrode assembly. The electrode assembly is placed in a packaging shell. The electrolyte is injected, and sealing is performed to obtain the electrochemical apparatus.

The electrochemical apparatus of this application may include any apparatus in which electrochemical reactions take place. Specific examples of the electrochemical apparatus include all kinds of primary batteries or secondary batteries. Especially, the electrochemical apparatus is a lithium secondary battery, including a lithium metal secondary battery, a lithium-ion secondary battery, a lithium polymer secondary battery, or a lithium-ion polymer secondary battery.

Electronic device

The electronic device of this application includes any one of the foregoing electrochemical apparatuses of this application. The electronic device of this application may be used without limitation in a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

The following describes some embodiments of this application more specifically by using examples and comparative examples. Unless otherwise stated, all parts, percentages, and ratios listed below are based on weight, all raw materials used herein are commercially available or synthesized in a conventional method.

Example 1

Preparation of positive electrode plate

The first material $LiCoO_2$, the second material $Li_{1.2}Ni_{0.133}Fe_{0.133}Mn_{0.534}O_2$, the binder (PVDF), and the conductive carbon black were mixed, where a weight ratio of $LiCoO_2$, $Li_{1.2}Ni_{0.133}Fe_{0.133}Mn_{0.534}O_2$, PVDF, and the conductive carbon black was 92.5:5.0:1.5:1.0, the solvent NMP was added, and the materials were mixed well in a vacuum mixer to obtain a positive electrode slurry. The positive electrode slurry was evenly applied on a surface of one side of the positive electrode current collector aluminum foil, and dried to obtain a positive electrode plate with a coating on one surface. Then, the above step was repeated on a surface of another side of the aluminum foil to obtain a positive electrode plate with a coating on double surfaces. Then, cold pressing and cutting were performed to obtain the positive electrode plate.

Preparation of negative electrode plate

The negative electrode active material graphite/SiO (a weight ratio of graphite to SiO was 4:1), the binder polyacrylic acid (PAA), and conductive carbon black were mixed at a mass ratio of 95.7:3.2:1.1, deionized water was added, and the materials were mixed well in a vacuum mixer to obtain a negative electrode slurry. The negative electrode slurry was evenly applied on a surface of one side of the negative electrode current collector copper foil, and dried to obtain a negative electrode plate with a coating on one surface. Then, the above step was repeated on a surface of another side of the copper foil to obtain a negative electrode plate with a coating on double surfaces. Then, cold pressing and cutting were performed to obtain the negative electrode plate.

Preparation of electrolyte

Ethylene carbonate (EC), ethyl methyl carbonate (EMC), and diethyl carbonate (DEC) were mixed well at a volume ratio of 1:1:1, to obtain an organic solvent. $LiPF_6$ was dissolved in the organic solvent, then fluoroethylene carbonate was added, and the mixture was mixed well to obtain an electrolyte. Based on a total mass of the electrolyte, a mass percentage of $LiPF_6$ was 12.5%, and a mass percentage of fluoroethylene carbonate was 5%.

Preparation of lithium-ion battery

The positive electrode plate, the separator, and the negative electrode plate were stacked in sequence. The separator was a polypropylene (PP) porous film with a thickness of 14 $\mu$m and was sandwiched between the positive electrode plate and the negative electrode plate for separation. Then, the resulting stack was wound to obtain a jelly roll, and the jelly roll was placed in an aluminum-plastic film, followed by electrolyte injection and sealing. Then, processes such as standing, formation, and shaping were performed to obtain a lithium-ion battery. The formation process was as follows: At 45°C, the first charge and discharge cycle was performed. A procedure was as follows: The lithium-ion battery was first charged at a constant current of 0.1C for 10 min, then charged to a specified voltage Q=4.6 V at a constant current of 0.5C, charged to a current less than or equal to 0.05C at a constant voltage, and then discharged to 3.0 V at a constant current of 0.5C.

Examples 2 to 24

These examples differed from Example 1 in that the material components in the positive electrode plate and the related parameters in the preparation steps were adjusted. See Table 1 for details.

Comparative examples 1 to 4

These examples differed from Example 1 in that the material components in the positive electrode plate and the related parameters in the preparation steps were adjusted. See Table 1 for details.

Tests

(1) Raman spectrum test

After fully charged, the lithium-ion battery was disassembled to obtain the positive electrode plate. An HR Evolution Raman spectrometer from HORIBA, France was used, with a laser wavelength of 532 nm (1 MHz solid-state laser), a power of 100 mW, and an XYZ automatic stage in which X=75 mm, Y=50 mm, a minimum XY step size was 50 nm, a minimum Z step size was 10 nm, and an imaging velocity was less than 10 ms.

(2) SEM test

A ZEISS SIGMA-500 field emission scanning electron microscope of Carl Zeiss AG was used to observe the morphology and test the average particle size of the sample. SEM images were photographed at an appropriate magnification; statistics collection of the longest diameters of random 50 particles of the first material was performed using image processing software, and an average value was used as the average particle size $D_1$ of the first material; and statistics collection of the longest diameters of random 50 particles of the second material was performed, and an average value was used as the average particle size $D_2$ of the second material.

(3) High-temperature cycling performance test

At 45°C, the lithium-ion battery was charged to 4.48 V at a constant current of 1C, charged to a current of 0.05C at a constant voltage of 4.48 V, and then discharged to 3.0 V at a constant current of 1C. This was a charge and discharge cycle. A discharge capacity of the lithium-ion battery at the first cycle was recorded. The lithium-ion battery was subjected to charge and discharge cycles according to the foregoing method, a discharge capacity at each cycle was recorded until the discharge capacity of the lithium-ion battery was degraded to 80% of the discharge capacity at the first cycle, and the number of charge and discharge cycles was recorded.

(4) Energy density test

At 25°C, the lithium-ion battery was charged to 4.48 V at a constant current of 0.2C, charged to a current of 0.05C at a constant voltage of 4.48 V, and then left standing for 30 minutes, and discharged to 3.0 V at a constant current of 0.2C. A discharge capacity $D_0$ of the lithium-ion battery at the rate of 0.2C was recorded. A volume of the lithium-ion battery was measured and recorded as $V_0$.
$$\text{Energy density} = D_0/V_0.$$

(5) Rate performance test

At 25°C, the lithium-ion battery was charged to 4.48 V at a constant current of 0.2C, charged to a current of 0.05C at a constant voltage of 4.48 V, and then discharged to 3.0 V at a constant current of 0.2C. A discharge capacity at the rate of 0.2C was recorded.
At 25°C, the lithium-ion battery was charged to 4.48 V at a constant current of 0.2C, charged to a current of 0.05C at a constant voltage of 4.48 V, and then discharged to 3.0 V at a constant current of 2C. A discharge capacity at the rate of 2C was recorded.

Discharge capacity retention rate of lithium-ion battery at 2C (%)=discharge capacity at 2C/discharge capacity at 0.2C × 100%.

Test results of Examples 1 to 24 and Comparative examples 1 to 4 are given in Table 2.

Table 1

| Type | Positive electrode active material | $I_{A1}/I_{B1}$ | First-cycle formation voltage Q (V) | Weight percentage of first material (wt%) | Weight percentage of second material (wt%) | Compacted density P of positive electrode plate (g/cm$^3$) | Average particle size $D_1$ of first material ($\mu$m) | Average particle size $D_2$ of second material ($\mu$m) | $D_2/D_1$ |
|---|---|---|---|---|---|---|---|---|---|
| Comparative example 1 | $LiCoO_2$ | $\infty$ | 4.53 | 97.5 | / | 4.2 | 15.0 | / | / |
| Comparative example 2 | $Li_{1.2}Ni_{0.133}Fe_{0.133}Mn_{0.534}O_2$ | 1.1 | 4.6 | / | 97.5 | 3.4 | / | 6.0 | / |
| Comparative example 3 | $LiCoO_2/Li_{1.2}Ni_{0.133}Fe_{0.133}Mn_{0.534}O_2$ | 49 | 4.6 | 97.4 | 0.1 | 4.2 | 15.0 | 6.0 | 0.4 |
| Comparative example 4 | $LiCoO_2/Li_{1.2}Ni_{0.133}Fe_{0.133}Mn_{0.534}O_2$ | 1.3 | 4.6 | 84.0 | 13.5 | 4.2 | 15.0 | 6.0 | 0.4 |
| Example 1 | $LiCoO_2/Li_{1.2}Ni_{0.133}Fe_{0.133}Mn_{0.534}O_2$ | 1.7 | 4.6 | 92.5 | 5.0 | 4.2 | 15.0 | 6.0 | 0.4 |
| Example 2 | $LiCo_{0.9}Ni_{0.1}O_2/Li_{1.2}Ni_{0.133}Fe_{0.133}Mn_{0.534}O_2$ | 2.6 | 4.6 | 92.5 | 5.0 | 4.2 | 11.3 | 5.1 | 0.45 |
| Example 3 | $LiCo_{0.9}Ni_{0.05}Mn_{0.05}O_2/Li_{1.2}Ni_{0.133}Fe_{0.133}Mn_{0.534}O_2$ | 2.1 | 4.6 | 92.5 | 5.0 | 4.2 | 14.3 | 6.0 | 0.42 |
| Example 4 | $Li_{0.95}Co_{0.99}Al_{0.01}O_{1.95}F_{0.05}/Li_{1.2}Ni_{0.133}Fe_{0.133}Mn_{0.534}O_2$ | 1.4 | 4.6 | 92.5 | 5.0 | 4.2 | 20.0 | 6.0 | 0.3 |

| Type | Positive electrode active material | $I_{A1}/I_{B1}$ | First-cycle formation voltage Q (V) | Weight percentage of first material (wt%) | Weight percentage of second material (wt%) | Compacted density P of positive electrode plate (g/cm$^3$) | Average particle size $D_1$ of first material ($\mu$m) | Average particle size $D_2$ of second material ($\mu$m) | $D_2/D_1$ |
|---|---|---|---|---|---|---|---|---|---|
| Example 5 | Li-CoO$_2$/L-i$_{1.2}$Ni$_{0.133}$Co$_{0.133}$M-n$_{0.534}$O$_2$ | 2.0 | 4.6 | 92.5 | 5.0 | 4.2 | 15.0 | 6.2 | 0.41 |
| Example 6 | Li-CoO$_2$/L-i$_{1.2}$Ni$_{0.133}$Fe$_{0.133}$Mn$_{0.524}$Ti$_{0.01}$O$_2$ | 2.6 | 4.6 | 92.5 | 5.0 | 4.2 | 17.4 | 6.8 | 0.39 |
| Example 7 | Li-CoO$_2$/L-i$_{1.2}$Ni$_{0.133}$Fe$_{0.133}$Mn$_{0.5}$Ti$_{0.02}$Zr$_{0.02}$O$_2$ | 3.8 | 4.6 | 92.5 | 5.0 | 4.2 | 18.0 | 7.9 | 0.44 |
| Example 8 | Li-CoO$_2$/L-i$_{1.2}$Ni$_{0.133}$Fe$_{0.133}$M-n$_{0.534}$O$_2$ | 9.0 | 4.55 | 92.5 | 5.0 | 4.2 | 17.2 | 8.6 | 0.5 |
| Example 9 | Li-CoO$_2$/L-i$_{1.2}$Ni$_{0.133}$Fe$_{0.133}$M-n$_{0.534}$O$_2$ | 5.6 | 4.5 | 92.5 | 5.0 | 4.2 | 17.5 | 7.0 | 0.4 |
| Example 10 | Li-CoO$_2$/L-i$_{1.166}$Ni$_{0.167}$Fe$_{0.167}$-Mn$_{0.5}$O$_2$ | 10.1 | 4.57 | 92.5 | 5.0 | 4.2 | 13.6 | 6.0 | 0.44 |
| Example 11 | Li-CoO$_2$/L-i$_{1.13}$Ni$_{0.122}$Fe$_{0.365}$M-n$_{0.383}$O$_2$ | 12.9 | 4.6 | 92.5 | 5.0 | 4.2 | 14.8 | 6.2 | 0.42 |

| Type | Positive electrode active material | $I_{A1}/I_{B1}$ | First-cycle formation voltage Q (V) | Weight percentage of first material (wt%) | Weight percentage of second material (wt%) | Compacted density P of positive electrode plate (g/cm$^3$) | Average particle size $D_1$ of first material ($\mu$m) | Average particle size $D_2$ of second material ($\mu$m) | $D_2/D_1$ |
|---|---|---|---|---|---|---|---|---|---|
| Example 12 | $LiCoO_2/Li_{1.2}Ni_{0.32}Fe_{0.04}Mn_{0.44}O_2$ | 16.6 | 4.6 | 92.5 | 5.0 | 4.2 | 13.2 | 5.8 | 0.44 |
| Example 13 | $LiCoO_2/Li_{1.259}Ni_{0.074}Fe_{0.074}Mn_{0.593}O_2$ | 20.8 | 4.6 | 92.5 | 5.0 | 4.2 | 17.6 | 7.9 | 0.45 |
| Example 14 | $LiCoO_2/Li_{1.2}Fe_{0.4}Mn_{0.4}O_2$ | 1.4 | 4.6 | 92.5 | 5.0 | 4.2 | 19.3 | 5.8 | 0.3 |
| Example 15 | $LiCoO_2/Li_{1.2}Ni_{0.04}Fe_{0.32}Mn_{0.44}O_2$ | 12.5 | 4.6 | 92.5 | 5.0 | 4.2 | 11.8 | 4.5 | 0.38 |
| Example 16 | $LiCoO_2/Li_{1.2}Ni_{0.133}Fe_{0.133}Mn_{0.534}O_2$ | 1.4 | 4.6 | 85.0 | 12.5 | 4.2 | 15.0 | 6.0 | 0.4 |
| Example 17 | $LiCoO_2/Li_{1.2}Ni_{0.133}Fe_{0.133}Mn_{0.534}O_2$ | 1.6 | 4.6 | 90.0 | 7.5 | 4.2 | 15.0 | 6.0 | 0.4 |
| Example 18 | $LiCoO_2/Li_{1.2}Ni_{0.133}Fe_{0.133}Mn_{0.534}O_2$ | 30.4 | 4.6 | 96.0 | 1.5 | 4.2 | 15.0 | 6.0 | 0.4 |
| Example 19 | $LiCoO_2/Li_{1.2}Ni_{0.133}Fe_{0.133}Mn_{0.534}O_2$ | 35.6 | 4.6 | 96.5 | 1.0 | 4.35 | 15.0 | 6.0 | 0.4 |

(continued)

| Type | Positive electrode active material | $I_{A1}/I_{B1}$ | First-cycle formation voltage Q (V) | Weight percentage of first material (wt%) | Weight percentage of second material (wt%) | Compacted density P of positive electrode plate (g/cm$^3$) | Average particle size $D_1$ of first material ($\mu$m) | Average particle size $D_2$ of second material ($\mu$m) | $D_2/D_1$ |
|---|---|---|---|---|---|---|---|---|---|
| Example 20 | Li-CoO$_2$/Li$_{1.2}$Ni$_{0.133}$Fe$_{0.133}$Mn$_{0.534}$O$_2$ | 1.7 | 4.6 | 92.5 | 5.0 | 4.0 | 15.0 | 6.0 | 0.4 |
| Example 21 | Li-CoO$_2$/Li$_{1.2}$Ni$_{0.133}$Fe$_{0.133}$Mn$_{0.534}$O$_2$ | 1.4 | 4.6 | 92.5 | 5.0 | 4.2 | 20.0 | 4.0 | 0.2 |
| Example 22 | Li-CoO$_2$/Li$_{1.09}$Ni$_{0.073}$Fe$_{0.582}$Mn$_{0.255}$O$_2$ | 1.8 | 4.6 | 92.5 | 5.0 | 4.2 | 15.0 | 6.0 | 0.4 |
| Example 23 | Li-CoO$_2$/Li$_{1.2}$Ni$_{0.133}$Fe$_{0.133}$Mn$_{0.534}$O$_2$ | 2.4 | 4.6 | 92.5 | 5.0 | 4.2 | 10.0 | 6.0 | 0.6 |
| Example 24 | Li-CoO$_2$/Li$_{1.23}$Ni$_{0.308}$Mn$_{0.462}$O$_2$ | 1.9 | 4.6 | 92.5 | 5.0 | 4.2 | 15.0 | 6.0 | 0.4 |

**Table 2**

| Type | Cycling performance | Energy density (Wh/L) | Rate performance (%) |
|---|---|---|---|
| Comparative example 1 | 604 | 780.0 | 94.6 |
| Comparative example 2 | 211 | 449.1 | 84.8 |
| Comparative example 3 | 610 | 780.4 | 94.6 |
| Comparative example 4 | 618 | 774.3 | 88.2 |
| Example 1 | 813 | 798.5 | 93.4 |
| Example 2 | 796 | 798.2 | 93.6 |
| Example 3 | 815 | 798.8 | 93.3 |
| Example 4 | 780 | 796.2 | 93.0 |
| Example 5 | 764 | 796.3 | 93.0 |
| Example 6 | 821 | 798.8 | 93.3 |
| Example 7 | 820 | 799.3 | 93.2 |
| Example 8 | 798 | 796.9 | 93.3 |
| Example 9 | 791 | 796.4 | 93.3 |
| Example 10 | 806 | 797.1 | 93.4 |
| Example 11 | 789 | 797.3 | 93.1 |
| Example 12 | 823 | 798.7 | 93.5 |
| Example 13 | 818 | 798.7 | 93.2 |
| Example 14 | 779 | 796.5 | 93.0 |
| Example 15 | 835 | 798.8 | 93.4 |
| Example 16 | 801 | 796.7 | 93.0 |
| Example 17 | 851 | 802.5 | 93.1 |
| Example 18 | 770 | 797.1 | 93.8 |
| Example 19 | 754 | 797.0 | 93.6 |
| Example 20 | 802 | 797.2 | 93.2 |
| Example 21 | 705 | 789.0 | 93.0 |
| Example 22 | 752 | 786.2 | 93.2 |
| Example 23 | 728 | 786.4 | 93.6 |
| Example 24 | 732 | 786.0 | 93.0 |

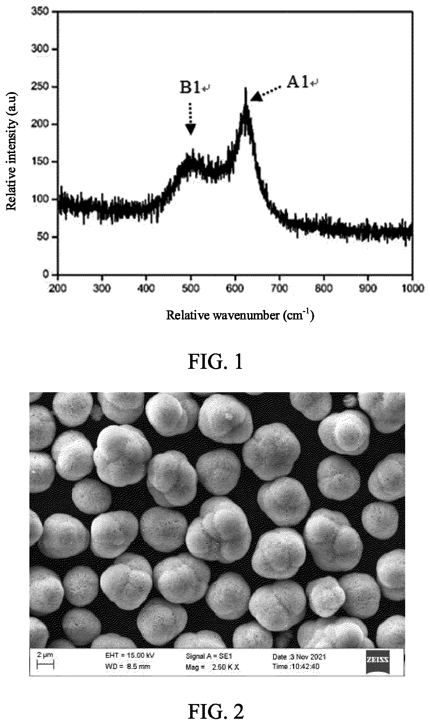

It can be seen from the parameter characteristics in Table 1 and the test data in Table 2 with reference to FIG. 1 and FIG. 2 that in this application, the lithium cobalt composite oxide and lithium manganese composite oxide with the layered crystal structure are jointly used in the positive electrode plate and activated at a high voltage, so that after the lithium-ion battery was fully charged, the Raman spectrum of the positive electrode active material layer satisfies: $1.4 \leq I_{A1}/I_{B1} \leq 36$. On one hand, this significantly increases the energy density of the lithium-ion battery. On the other hand, this can enable the positive electrode plate to have high structural stability during cycling, thereby allowing the lithium-ion battery to have significantly prolonged high-temperature cycle life.

Specifically, compared with Example 1, Comparative example 1 contains only the first material, Comparative example 2 contains only the second material, although Comparative examples 3 and 4 each contain both the first material and the second material, all the peak intensity ratios $I_{A1}/I_{B1}$ in the Raman spectra of Comparative examples 3 and 4 do not fall within the range of 1.4 to 36. Referring to Table 2, the number of high-temperature cycles of Comparative examples 1 to 4 is only about 600 to 620, whereas the number of cycles of Example 1 is 813 and is far higher than those of Comparative examples 1 to 4. This indicates that an appropriate peak intensity ratio $I_{A1}/I_{B1}$ can significantly improve the high-temperature cycling performance of the lithium-ion battery.

It can be seen from the comparison between Examples 1 to 23 and Example 24 that an appropriate amount of element T (Fe and/or Co) is added into the components of the second material, so that when $0.05 \leq n_T/n_M \leq 0.5$, the high-temperature cycle life of the lithium-ion battery can be further prolonged. This is because adding an appropriate amount of element T into the components of the second material makes the structure of the second material after lithium deintercalation more stable. Since most of the element Mn in products of the second material after lithium deintercalation is in the form of $Mn^{4+}$, the Jahn-Teller distortion effect of $Mn^{3+}$ can be effectively suppressed, the damage to the SEI film caused by dissolution of the element Mn is reduced, and the high-temperature cycle life of the electrochemical apparatus can be effectively prolonged. Furthermore, it can be seen from the comparison between Example 1 and Example 5 that compared with the second material containing Co, the second material containing Fe can further prolong the high-temperature cycle life of the lithium-ion battery. This is because ionization energy of $Fe^{3+}$ to $Fe^{4+}$ is much higher than that of $Co^{3+}$ to $Co^{4+}$. Therefore, during cycling at a high voltage, an average valence state of Fe is lower than that of Co. On one hand, this can reduce oxidation of high-valence metal ions on the electrolyte at the interface. On the other hand, this helps Mn maintain a high valence state, suppressing the Jahn-Teller distortion effect of Mn and reducing the risk of Mn dissolution. In addition, this can enhance the structural stability of the material, suppressing the migration of transition metals to a lithium layer, thereby prolonging the high-temperature cycle life of the lithium-ion battery.

In addition, it can be further seen from the parameter characteristics in Table 1 and the test data in Table 2 that the examples where the average particle size ratios $D_2/D_1$ of the second material to the first material fall within a range of 0.3 to 0.5 can have longer high-temperature cycle life. This is because when $D_2/D_1$ falls within the range of 0.3 to 0.5, the particles of the second material can be embedded among the particles of the first material, efficiently supplementing active lithium for the first material and reducing the occurrence of side reactions on their surfaces, thereby prolonging the high-temperature cycle life of the electrochemical apparatus.

The foregoing descriptions are merely preferable embodiments of this application, but are not intended to limit this application. Any modification, equivalent replacement, or improvement made without departing from the spirit and principle of this application shall fall within the protection scope of this application.

**Claims**

1.  An electrochemical apparatus, comprising a positive electrode plate, wherein the positive electrode plate comprises a positive electrode active material layer, and in a fully charged state of the electrochemical apparatus, a Raman spectrum of the positive electrode active material layer has a characteristic peak A1 within a range of 580 cm$^{-1}$ to 640 cm$^{-1}$ and a characteristic peak B1 within a range of 420 cm$^{-1}$ to 520 cm$^{-1}$.

2.  The electrochemical apparatus according to claim 1, wherein a peak intensity of the characteristic peak A1 is $I_{A1}$, and a peak intensity of the characteristic peak B1 is $I_{B1}$, satisfying: $1.4 \leq I_{A1}/I_{B1} \leq 36$.

3.  The electrochemical apparatus according to claim 2, wherein $1.4 \leq I_{A1}/I_{B1} \leq 21$.

4.  The electrochemical apparatus according to claim 1, wherein the positive electrode active material layer comprises a first material and a second material;

    the first material is a lithium cobalt composite oxide with a layered crystal structure; and
    the second material is a lithium manganese composite oxide with a layered crystal structure.

5.  The electrochemical apparatus according to claim 4, wherein at least one of the following conditions is satisfied:

    (i) the second material comprises R-3m and C2/m crystal phase structures;
    (ii) the second material comprises element Mn, element T, element O, selectable element Ni, and selectable element T', wherein the element T comprises at least one of Fe or Co, and the element T' comprises at least one of Mg, Al, Ti, V, Cr, Cu, Y, Zr, Nb, Mo, La, Zn, Ga, Ru, Ag, Sn, Au, Ce, Pr, Nd, Sm, Gd, or W; and in the second material, a molar content of the element Mn is $n_{Mn}$, a molar content of the element T is $n_T$, a molar content of the element O is $n_O$, a molar content of the element Ni is $n_{Ni}$, a molar content of the element T' is $n_{T'}$, and a sum of the molar content of the element Mn, element Fe, element Ni, and element T is $n_M$, satisfying: $0.25 \leq n_{Mn}/n_M \leq 0.85$, $0.05 \leq n_T/n_M \leq 0.65$, $0 \leq n_{Ni}/n_M \leq 0.4$, $0 \leq n_{T'}/n_M \leq 0.05$, and $0.35 \leq n_M/n_O \leq 0.475$; or
    (iii) the first material comprises element Co and selectable element Me, wherein the element Me comprises at least one of Ni, Mn, Al, Mg, Ti, Zr, La, Y, Mo, V, Cu, Zn, Ga, Nb, Cr, Ba, W, Ru, Ag, Sn, Au, Ce, Pr, Nd, Sm, Gd, or Ca; and in the second material, a molar content of the element Co is $m_{Co}$, a molar content of the element Me is $m_{Me}$, and a sum of the molar content of the element Co and element Me is $m_M$, satisfying: $0.5 \leq m_{Co}/m_M \leq 1$, and $0 \leq m_{Me}/m_M \leq 0.5$.

6. The electrochemical apparatus according to claim 5, wherein at least one of the following conditions is satisfied:

(1) $0.05 \leq n_T/n_M \leq 0.5$; or
(2) the element T comprises Fe, and in the second material, a molar content of element Fe is $n_{Fe}$, satisfying: $0.05 \leq n_{Fe}/n_M \leq 0.5$.

7. The electrochemical apparatus according to claim 4, wherein at least one of the following conditions is satisfied:

(a) an average particle size of the first material is $D_1$, and an average particle size of the second material is $D_2$, satisfying: $0.3 \leq D_2/D_1 \leq 0.5$;
(b) the average particle size $D_1$ of the first material is 10 $\mu$m to 25 $\mu$m; or
(c) the average particle size $D_2$ of the second material is 4 $\mu$m to 9 $\mu$m.

8. The electrochemical apparatus according to claim 1, wherein a compacted density of the positive electrode active material layer is P, satisfying: $3.5 \text{ g/cm}^3 \leq P \leq 4.5 \text{ g/cm}^3$.

9. The electrochemical apparatus according to claim 4, wherein at least one of the following conditions is satisfied:

(1) the second material comprises any one of materials represented by chemical formula I:

$$Li_{2-e}Ni_aT_bMn_cT'_dO_2 \qquad \text{chemical formula I,}$$

wherein $0 \leq a \leq 0.35$, $0 < b \leq 0.6$, $0.25 \leq c \leq 0.6$, $0 \leq d \leq 0.05$, $0.7 \leq a+b+c+d \leq 0.95$, $0.7 \leq e \leq 0.95$, T comprises at least one of Fe or Co, and T' comprises at least one of Mg, Al, Ti, V, Cr, Cu, Y, Zr, Nb, Mo, La, Zn, Ga, Ru, Ag, Sn, Au, Ce, Pr, Nd, Sm, Gd, or W; or
(2) the first material comprises any one of materials represented by chemical formula II:

$$Li_xCo_yMe_{1-y}O_{2-t}A_t \qquad \text{chemical formula II,}$$

wherein $0.6 \leq x \leq 1.2$, $0.5 \leq y \leq 1$, $0 \leq t \leq 0.2$, Me comprises at least one of Ni, Mn, Al, Mg, Ti, Zr, La, Y, Mo, V, Cu, Zn, Ga, Nb, Cr, Ba, W, Ru, Ag, Sn, Au, Ce, Pr, Nd, Sm, Gd, or Ca, and A comprises at least one of S, N, F, Cl, or Br.

10. An electronic device, comprising the electrochemical apparatus according to any one of claims 1 to 9.

FIG. 1

FIG. 2

## INTERNATIONAL SEARCH REPORT

| International application No. |
| --- |
| **PCT/CN2022/094726** |

**A. CLASSIFICATION OF SUBJECT MATTER**

H01M4/525(2010.01)i;H01M4/505(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; EPTXT; USTXT; ENTXT; VEN; CNKI: 电池, 正极, 锂钴氧化物, 锂锰氧化物, 拉曼光谱, battery, positive electrode, lithium cobalt oxide, lithium manganese oxide, raman spectra

**C. DOCUMENTS CONSIDERED TO BE RELEVANT**

| Category* | Citation of document, with indication, where appropriate, of the relevant passages | Relevant to claim No. |
| --- | --- | --- |
| X | CN 107104245 A (NANJING AMPRIUS CO., LTD.) 29 August 2017 (2017-08-29) description, paragraphs 10, 15 and 18-147 | 1-10 |
| Y | CN 107104245 A (NANJING AMPRIUS CO., LTD.) 29 August 2017 (2017-08-29) description, paragraphs 10, 15 and 18-147 | 5, 6, 9 |
| Y | US 2016218360 A1 (NEC CORP. et al.) 28 July 2016 (2016-07-28) description, paragraphs 21-37 and 63-64 | 5, 6, 9 |
| X | CN 109713229 A (BEIJING ZHONGNENG DONGDAO LVCHI TECHNOLOGY CO., LTD.) 03 May 2019 (2019-05-03) description, paragraphs 3, 7-29 and 38-49 | 1-10 |
| Y | CN 109713229 A (BEIJING ZHONGNENG DONGDAO LVCHI TECHNOLOGY CO., LTD.) 03 May 2019 (2019-05-03) description, paragraphs 3, 7-29 and 38-49 | 5, 6, 9 |
| A | CN 109994729 A (NINGDE AMPEREX TECHNOLOGY LTD.) 09 July 2019 (2019-07-09) entire document | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 February 2023** | **15 February 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
| --- |
| **PCT/CN2022/094726** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2006286336 A (SANYO ELECTRIC CO., LTD.) 19 October 2006 (2006-10-19)<br>    entire document | 1-10 |

Form PCT/ISA/210 (second sheet) (July 2022)

**INTERNATIONAL SEARCH REPORT**
Information on patent family members

International application No.

**PCT/CN2022/094726**

| Patent document cited in search report | | | Publication date (day/month/year) | Patent family member(s) | | | Publication date (day/month/year) |
|---|---|---|---|---|---|---|---|
| CN | 107104245 | A | 29 August 2017 | None | | | |
| US | 2016218360 | A1 | 28 July 2016 | JPWO | 2015025844 | A1 | 02 March 2017 |
| | | | | JP | 6603966 | B2 | 13 November 2019 |
| | | | | WO | 2015025844 | A1 | 26 February 2015 |
| | | | | US | 10164250 | B2 | 25 December 2018 |
| CN | 109713229 | A | 03 May 2019 | None | | | |
| CN | 109994729 | A | 09 July 2019 | EP | 3942633 | A1 | 26 January 2022 |
| | | | | US | 2021234154 | A1 | 29 July 2021 |
| | | | | JP | 2022525865 | A | 20 May 2022 |
| | | | | WO | 2020187201 | A1 | 24 September 2020 |
| | | | | CN | 109994729 | B | 05 March 2021 |
| JP | 2006286336 | A | 19 October 2006 | JP | 4794192 | B2 | 19 October 2011 |

Form PCT/ISA/210 (patent family annex) (July 2022)